Europäisches Patentamt

(19) European Patent Office

Office européen des brevets

(11) Numéro de publication : **0 280 632 B1**

(12) **FASCICULE DE BREVET EUROPEEN**

(45) Date de publication du fascicule du brevet :
18.09.91 Bulletin 91/38

(51) Int. Cl.⁵ : **G01D 5/20**

(21) Numéro de dépôt : 88420068.4

(22) Date de dépôt : 24.02.88

(54) **Dispositif électronique de mesure d'angle.**

(30) Priorité : 26.02.87 FR 8702549

(43) Date de publication de la demande :
31.08.88 Bulletin 88/35

(45) Mention de la délivrance du brevet :
18.09.91 Bulletin 91/38

(84) Etats contractants désignés :
AT BE CH DE ES FR GB IT LI NL SE

(56) Documents cités :
EP-A- 0 046 006
FR-A- 2 379 800
FR-A- 2 532 761

(73) Titulaire : SGS-THOMSON
MICROELECTRONICS S.A.
101 Boulevard Murat
F-75016 Paris (FR)

(72) Inventeur : Lusinchi, Jean-Pierre
13, rue de l'Ancienne Ferme
F-38120 Saint-Egreve (FR)
Inventeur : Moreau, Jean-Michel
4 Rue Louis Lachenal
F-38000 Grenoble (FR)

(74) Mandataire : de Beaumont, Michel et al
1bis, rue Champollion
F-38000 Grenoble (FR)

## Description

La présente invention concerne le domaine de la détection angulaire d'une pièce en rotation par des moyens électroniques.

Dans les commandes de machines-outils, il est souvent nécessaire de repérer la position angulaire d'une pièce en rotation afin de déclencher une action suivant la mesure de cette position.

Dans l'état de l'art antérieur, cette fonction est assurée par exemple par une came, ou par un système de décodage des informations contenues sur un disque solidaire de la pièce en rotation. Sur un tel disque, à chaque position angulaire est associée une information codée et la lecture de cette information fournit directement la position de la pièce.

Un inconvénient de la came mécanique est que la lecture de la position est purement mécanique et n'est donc pas susceptible d'être traitée directement par un système électronique. Or le traitement électronique de l'information est nécessaire si l'on veut sophistiquer la décision et l'associer par exemple à d'autres informations fournies par d'autres organes de mesure.

Le système de mesure par zones codées présente l'inconvénient d'être cher : le disque lui-même est délicat à réaliser et la lecture de l'information nécessite une électronique sophistiquée. Généralement l'information est représentée par des zones alternativement transparentes et opaques sur le disque et leur lecture nécessite une source de lumière directive et un organe de lecture également directif. Une telle mise en oeuvre n'est pas envisageable chaque fois que la pièce est dans un environnement sévère ou bien que l'on cherche à faire un système économique ou les deux.

Par ailleurs, le document EP-A-46006 décrit un capteur magnétique à réluctance variable dont le signal intégré est utilisé pour fournir une indication de position et notamment de passage par zéro, en s'affranchissant du bruit et des variations d'amplitude. Ce document ne prévoit pas de faire de mesure de valeurs angulaires.

Un objet de la présente invention est de prévoir un dispositif électronique de mesure d'angle fournissant un signal directement étalonable en valeur d'angle.

Un autre objet de la présente invention est de prévoir un tel dispositif utilisant un détecteur particulièrement simple.

Pour atteindre ces objets ainsi que d'autres, la présente invention prévoit un procédé et un dispositif de mesure d'angle tels que définis dans les revendications indépendantes 1 et 2 et un dispositif de détection tel que défini dans la revendication indépendante 3.

Ces objets, caractéristiques et avantages ainsi que d'autres de la présente invention seront exposés plus en détail dans la description suivante de modes de réalisation particuliers faite en relation avec les figures jointes parmi lesquelles :

les figures 1A et 1B représentent des courbes de signal en fonction du temps destinées à expliquer le fonctionnement d'un dispositif selon l'invention ;

la figure 2 représente de façon schématique un mode de réalisation fondamental de la présente invention ; et

la figure 3 représente de façon schématique un mode de réalisation particulier de la présente invention.

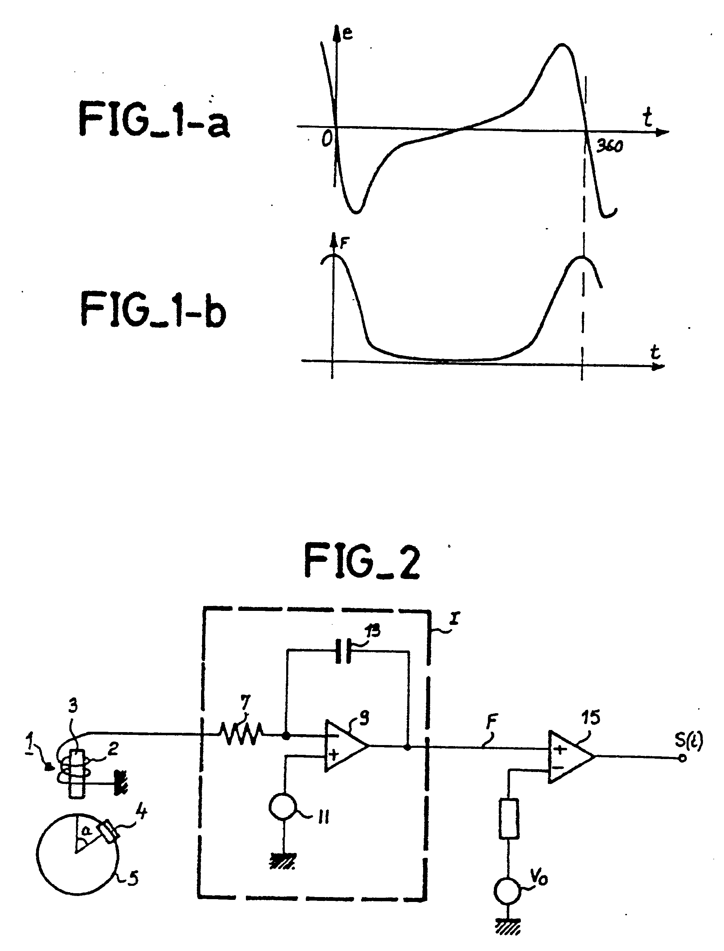

La présente invention, pour détecter la position angulaire d'une pièce en rotation, utilise un capteur comprenant un circuit magnétique dont une partie fixe, associée à une bobine, est située en regard d'une partie périphérique de la pièce en rotation qui porte elle-même un élément de circuit magnétique mobile tel que la réluctance du circuit magnétique est minimale quand l'élément mobile se trouve en regard de la partie fixe. On obtient ainsi à la sortie de la bobine une tension telle que représentée en figure 1A.

Tandis que le flux dans la bobine varie, il se développe une tension aux bornes de cette bobine égale à :

$$e = - dF/dt$$

où F représente le flux magnétique créé par le circuit magnétique et entrant dans la bobine.

Cette relation s'écrit ainsi :

$$edt = - dF.$$

La fonction primitive de la tension e est donc :

$$\int edt = - \int dF = - F + constante$$

A une constante près, l'intégrale dans le temps de la tension développée aux bornes de la bobine ne dépend que du flux magnétique entrant dans cette bobine et ne dépend pas de la vitesse de rotation de la pièce en mouvement.

A un instant donné, le flux entrant dans la bobine ne dépend que de la structure du circuit magnétique et de la position relative de la partie fixe par rapport à l'élément mobile de ce circuit magnétique. Ainsi la fonction F peut être directement repérée en position angulaire de l'élément mobile.

Comme le représente la figure 2, un dispositif selon la présente invention comprend un détecteur 1 constitué d'une bobine 2 associée à un circuit magnétique comprenant un élément fixe 3 et un élément mobile 4 fixé sur une pièce en rotation 5 dont on veut déterminer la position angulaire. L'un des éléments du circuit magnétique comprend un aimant. Ainsi, tandis que la partie mobile 4 tourne, la réluctance du circuit magnétique varie et la variation du flux F(t) en fonction du temps entraîne l'apparition d'une tension e aux bornes de la bobine. Ce signal e est représenté sur une période s'étendant entre des angles de 0 et de 360° en figure 1A. Ce signal e ne permet pas d'obtenir simplement des repères angulaires, autres que 0°, étant donné que sa forme et son amplitude varient avec la vitesse de rotation.

La sortie de la bobine 3 est intégrée par un intégrateur I comprenant par exemple une résistance 7 connectée à l'entrée – d'un amplificateur opérationnel 9 dont l'entrée + est reliée à une source de tension fixe 11. L'entrée – de l'amplificateur 9 est reliée à sa sortie par l'intermédiaire d'un condensateur 13.

La sortie de l'intégrateur I constitue le signal F dont la variation sur une période est illustrée en figure 1B. Comme cela a été exposé précédemment, pour une configuration donnée de l'ensemble circuit magnétique/bobine, la représentation de la fonction F en fonction de l'angle a aura toujours la même forme et la même amplitude sur une période de 0 à 360°. Ceci reste vrai même si la vitesse est variable à l'intérieur d'une période. Chaque valeur de F est donc associée à une valeur angulaire (à $k.360°$ près, $k$ étant un entier) et le signal F peut être gradué directement en angles.

Si l'on cherche à obtenir un signal de décision quand on passe par une valeur angulaire donnée, on peut par exemple, comme cela est également représenté en figure 2, envoyer le signal F sur la première entrée (+) d'un comparateur 15 dont la deuxième entrée (–) reçoit une tension de référence à partir d'une source de tension $V_0$. On obtient ainsi à la sortie du comparateur 15 le signal de décision s(t) recherché. Si on le souhaite, on pourra prévoir un circuit classique pour effectuer des descriminations entre fronts montants et descendants.

La fonction F passe par un maximum au voisinage de la valeur angulaire a = 0 (bobine en regard de l'aimant) et décroît rapidement ensuite. Si l'on veut repérer avec précision des positions entre 0 et 360°, on peut multiplier les parties fixes de circuits magnétiques et les bobines associées. Les tensions aux bornes des bobines peuvent être soit ajoutées, soit intégrées et amplifiées séparément. Si K est le nombre de ces bobines, supposées réparties uniformément sur la périphérie de la pièce, dans le premier cas la position sera repérée à 360°/K près, et dans le second cas sans ambiguïté.

La figure 1B représente l'allure théorique de la fonction F. Dans la pratique, les imperfections de réalisation du système font que la fonction F n'est pas strictement monotone sur une demi-période. Pour pouvoir associer sans ambiguïté un angle compris entre 0 et 180° (à $k.180°$ près) à une valeur de F, il est souhaitable de corriger la fonction F de telle façon qu'elle devienne strictement monotone. De plus, en prévoyant des moyens pour distinguer si F atteint une valeur donnée en croissant ou en décroissant, il est possible de lever l'ambiguïté entre les demi-périodes (0, 180°) et (180°, 360°) à $k.360°$ près.

La correction de la non-monotonie de la fonction peut être obtenue très simplement en rajoutant au signal F une certaine fraction du signal e. Dans la pratique, il suffit d'ajouter une fraction de e telle que, en chaque point de la résultante F + e, le rapport e/F soit de l'ordre de 1/10.

Une autre amélioration du système consiste à le doter d'un dispositif d'autoétalonnage qui permette de conserver les caractéristiques de détection de position quelles que soient les dispersions de fabrication sur la bobine et l'aimant.

Ces dispersions font qu'à un couple circuit magnétique-bobine donné correspond une courbe F particulière. Donc, si l'on repère une valeur particulière de la fonction F, cela correspondra à des angles a légèrement différents suivant les dispersions des caractéristiques du circuit magnétique et de la bobine.

Pour corriger cela, on asservit le signal de référence appliqué au comparateur 15 de telle façon que le signal de décision s(t) provoque lui-même un signal dont la différence avec une référence absolue reste nulle.

Considérons par exemple un dispositif dans lequel le front montant de s(t) déclenche un générateur en dent de scie, c'est-à-dire un générateur délivrant une tension V(t) proportionnelle au temps. Au bout d'un temps déterminé T, le signal V(t) atteint une valeur $V_1$ que l'on compare à une référence absolue $V_a$. Une fraction de la différence $V_a - V_1$ est ajoutée à la tension de référence $V_0$ : ainsi, si $V_a - V_1$ est positif, c'est que le signal s(t) est arrivé trop tôt. En augmentant $V_0$ on retarde le moment où F[a(t)] franchit le seuil et on corrige donc le système. Si $V_a - V_1$ est négatif, en abaissant $V_0$ on avance le moment où le signal V(t) croît et on corrige également le système. La référence $V_0$ corrigée va donc s'établir en permanence à une valeur telle que le signal de décision s(t) apparaisse au moment où la pièce en rotation passe par un angle a repérable par rapport à une référence absolue extérieure représentée par $V_a$, et ce, quelles que soient les dispersions des caractéristiques de l'ensemble circuit magnétique/bobine, ou bien quelles que soient les fluctuations dans le temps de ces caractéristiques.

Dans la pratique, pour que cet asservissement soit stable, il est nécessaire d'intégrer la différence $V_a - V_1$ à l'aide par exemple d'un réseau RC dont la constante de temps est calculée de façon classique en tenant compte des compromis nécessaires stabilité-temps de réponse.

La période de mesure T peut être variable et déterminée, par exemple, par le temps qui s'écoule entre le passage de l'élément mobile par l'angle a et le passage par 0, angle pour lequel le signal F est maximum. Cet instant est facilement repérable puisqu'il correspond à l'extremum de F, donc au passage par zéro de la dérivée de F, c'est-à-dire de la tension $e(t)$ aux bornes de la bobine.

Si on corrige $V_0$ de telle façon que $V_a - V_1$ reste nul, on détectera l'angle auquel il faut déclencher la croissance de $V(t)$ pour que ce signal atteigne une valeur donnée au moment où a = 0, et ce, quelle que soit la vitesse de rotation de la pièce. Au lieu de déclencher une tension $V(t)$ on peut déclencher un courant $I(t)$ proportionnel au temps. Ceci permet d'emmagasiner une énergie donnée respectivement dans un condensateur et dans une bobine pendant le temps T.

Dans ce cas, il est nécessaire d'apporter une autre amélioration au système destinée à améliorer ses performances si la pièce en rotation subit des accélérations ou des décélérations.

En cas par exemple d'accélération, le temps $T_a$ qui va s'écouler entre le passage par a, angle auquel on associe le déclenchement du signal de décision $s(t)$, et le passage par 0, sera plus court que le temps T qui se serait écoulé entre ces deux événements s'il n'y avait pas eu d'accélération de la pièce. Le signal $V(t)$ ou $I(t)$ n'aura donc pas le temps d'atteindre la valeur $V_a$ ou $I_a$ recherchée. Si, à la suite de l'accélération, la vitesse se stabilise, l'asservissement de $V_0$ sur $V_a$ corrigera cette erreur. Il peut être cependant souhaitable de minimiser cette erreur dès la première période de rotation de la pièce au cours de laquelle a lieu l'accélération. Pour cela il faut ajouter au signal F une quantité d'autant plus grande que la variation de vitesse est grande. Le signal $e(t)$ étant proportionnel à la vitesse de rotation, il faut donc ajouter à F une fraction de $e(t)$, c'est-à-dire effectuer la même correction que celle suggérée précédemment pour éviter des défauts de monotonie de la fonction F. On réalise ainsi une correction de l'asservissement connue dans l'état de la technique des asservissements sous le nom de correction différentielle.

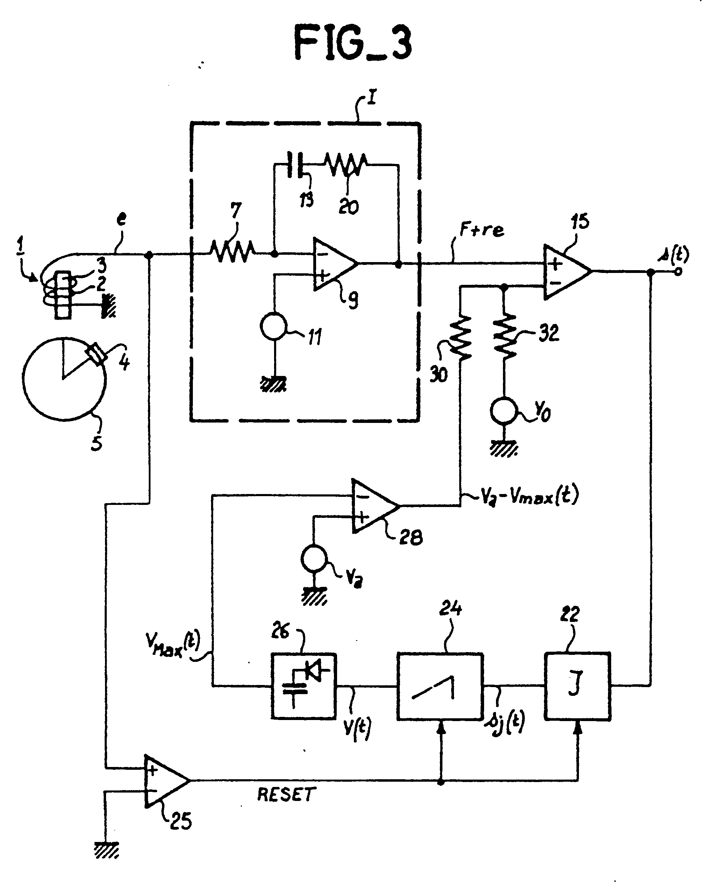

La figure 3 représente un circuit permettant d'introduire les diverses améliorations énoncées précédemment au signal de mesure d'angle, ou signal de décision. On retrouve en figure 3 les éléments 1 à 15 de la figure 2. Ainsi, le signal $e(t)$ de la bobine est intégré par l'intégrateur I et comparé à une tension de référence par le comparateur 15 pour fournir un signal de décision $s(t)$.

Pour réinjecter une partie du signal direct e de la bobine dans le signal intégré F, une résistance 20 est ajoutée en série avec le condensateur 13 de l'intégrateur. Ainsi, à la sortie de l'amplificateur 9, au lieu de trouver simplement le signal F, on trouve un signal F + re où r est une fonction du rapport des impédances entre l'impédance d'entrée 7 de l'amplificateur 9 et l'impédance de la dérivation comprenant les composants 13 et 20.

D'autre part, au lieu de comparer le signal F + re à une tension de référence fixe $V_0$, on asservit cette référence pour que le dispositif selon l'invention fonctionne quelles que soient les dispersions résultant des écarts de valeurs des composants électroniques et des écarts de valeur du circuit magnétique et de la bobine associée.

Cet asservissement est obtenu par un circuit comprenant une bascule de type T 22 recevant le signal $s(t)$ qui déclenche cette bascule sur ses fronts montant.

Le signal résultant $s_j(t)$ en sortie de la bascule 22 déclenche un générateur de dents de scie 24 qui délivre une tension $V(t)$ (ou un courant $I(t)$) proportionnelle au temps.

La bascule 22 et le générateur de dents de scie 24 sont remis dans leur état initial par un signal RESET qui apparaît quand le signal $e(t)$ passe par zéro. Cet événement correspond à la réluctance minimale du circuit magnétique et est obtenu en comparant $e(t)$ à 0 à l'aide d'un comparateur 25.

Le signal en dents de scie $V(t)$ est traité dans un détecteur de crête 26 qui élabore le signal $V_{max}(t)$.

La différence $V_{max}(t)$ moins une tension de référence Va fournie par un comparateur 28 est ajoutée à la tension $V_0$ et sert à élaborer le signal auquel sera comparé F + re pour décider que la pièce en rotation P vient d'atteindre une position angulaire a prédéterminée.

La présente invention est susceptible de nombreuses variantes et modifications qui apparaîtront à l'homme de l'art qui pourra notamment utiliser divers circuits annexes connus dans la technique de la détection électronique de valeurs angulaires. De même, les réalisations pratiques des diverses fonctions électroniques pourraient être modifiées, par exemple, comme circuit intégrateur on pourrait utiliser des circuits plus complexes ou un circuit simple à résistance et capacité.

Parmi les applications possibles de l'invention, on peut mentionner la commande de lampe à éclair de stroboscopie, la commande de moteur à courant continu sans collecteur, la commande d'allumage automobile.

## Revendications

1. Procédé de mesure d'angle d'une pièce en rotation au moyen d'un capteur magnétique à réluctance variable constitué d'une partie fixe (3) associée à une bobine (2) et d'au moins un élément mobile (4) solidaire de la pièce en rotation, consistant à intégrer le signal de sortie du capteur, et caractérisé en ce qu'il comprend les étapes suivantes :

   — tracer la courbe du signal intégré pour un tour de rotation à vitesse constante d'où il résulte que chaque amplitude instantanée du signal intégré correspond à une valeur angulaire instantanée,

   — mesurer pour une vitesse quelconque, éventuellement variable, la valeur instantanée du signal intégré et en déduire la valeur angulaire correspondante.

2. Dispositif de mesure d'angle comprenant un circuit magnétique à réluctance variable constitué d'une partie fixe (3) associée à une bobine (2) et d'au moins un élément mobile (4) solidaire d'une pièce (5) en rotation devant la partie fixe et dont on souhaite détecter la position angulaire, comprenant des moyens d'intégration (I) de la tension aux bornes de la bobine, caractérisé en ce qu'il comprend en outre :
— des moyens de mesure de la valeur instantanée de la tension intégrée (15),
— des moyens pour rapporter cette mesure à une courbe d'étalonnage tension intégrée/angle.

3. Dispositif de détection du passage d'une pièce en rotation par une position angulaire choisie réglable comprenant un circuit magnétique à réluctance variable constitué d'une partie fixe (3) associée à une bobine (2) et d'au moins un élément mobile (4) solidaire d'une pièce (5) en rotation devant la partie fixe, comprenant un intégrateur du signal de capteur, un comparateur comparant la tension intégrée à une valeur de référence, caractérisé en ce que la valeur de référence est choisie pour correspondre à une position angulaire choisie.

4. Dispositif de mesure d'angle selon la revendication 2, caractérisé en ce que les moyens de mesure comprennent un moyen (15, $V_0$) effectuant une comparaison entre la tension intégrée et une valeur de référence correspondant à un angle prédéterminé.

5. Dispositif de mesure d'angle selon la revendication 2, caractérisé en ce qu'il comprend en outre des moyens (20) pour ajouter à la tension intégrée un signal proportionnel à la tension aux bornes de la bobine.

6. Dispositif de mesure d'angle selon la revendication 4, caractérisé en ce qu'il comprend des moyens (22, 32) pour étalonner la courbe de tension intégrée par asservissement de la tension de référence résultant d'une comparaison entre la valeur maximale $V_{max}(t)$ du signal de tension intégrée et une tension de référence absolue ($V_a$).

**Patentansprüche**

1. Verfahren zum Messen des Drehwinkels eines drehenden Teiles mit Hilfe eines magnetischen Fühlers mit variabler Reluktanz, der aus einem einer Spule (2) zugeordneten festen Teil (3) und mindestens einem, mit dem drehenden Teil verbundenen beweglichen Element (4) besteht, wobei das Ausgangssignal des Fühlers integriert wird, gekennzeichnet durch die folgenden Schritte :
— Nachfahren des integrierten Signals über eine Drehung bei konstanter Geschwindigkeit, wobei als Ergebnis jeder momentane Amplitudenwert des integrierten Signals einem momentanen Winkelwert entspricht,
— Messen des momentanen Signalwertes für eine beliebige, möglicherweise variable Geschwindigkeit und Ableiten des entsprechenden Winkelwertes daraus.

2. Anordnung zur Winkelmessung mit einem magnetischen Kreis variabler Reluktanz, der aus einem, einer Spule (2) zugeordneten festen Teil (3) und mindestens einem beweglichen Element (4) besteht, das mit einem vor dem festen Teil drehenden Teil (5) verbunden ist, dessen Winkelposition zu bestimmen ist, ferner mit einer Einrichtung (I) zum Integrieren der Spannung an den Spulenanschlüssen, dadurch gekennzeichnet, daß die Anordnung darüber hinaus aufweist :
— Meßeinrichtungen zum Messen des momentanen Wertes der integrierten Spannung (15),
— Einrichtungen zum Beziehen dieser Messung auf eine Eichkurve für die integrierte Spannung in bezug zum Drehwinkel.

3. Anordnung zum Detektieren des Durchlaufens eines rotierenden Teiles durch eine wählbare und regelbare Winkelposition, mit einem magnetischen Kreis variabler Reluktanz, der aus einem, einer Spule (2) zugeordneten festen Teil (3) und mindestens einem beweglichen Element (4) besteht, das mit einem, vor dem festen Teil drehenden Teil (5) verbunden ist, mit einem Integrator für das Fühlersignal und mit einem Vergleicher, der die integrierte Spannung mit einem Referenzwert vergleicht, dadurch gekennzeichnet, daß der Referenzwert als einer bestimmten Winkelposition entsprechend gewählt ist.

4. Anordnung zum Messen eines Drehwinkels nach Anspruch 2, dadurch gekennzeichnet, daß die Meßeinrichtungen eine Vergleichseinrichtung (15, V0) zum Vergleich zwischen der integrierten Spannung und einem, einem vorbestimmten Winkel entsprechenden Referenzwert aufweisen.

5. Anordnung zum Messen eines Drehwinkels nach Anspruch 2, dadurch gekennzeichnet, daß sie zusätzlich Einrichtungen (20) zum Hinzufügen eines Signales zu der integrierten Spannung aufweist, welches proportional der Spannung an den Spulenanschlüssen ist.

6. Anordnung zum Messen eines Drehwinkels nach Anspruch 4, dadurch gekennzeichnet, daß sie Eicheinrichtungen (22, 32) aufweist zum Eichen der Kurve der integrierten Spannung durch Regeln der Referenzspannung, was durch einen Vergleich zwischen dem Maximalwert $V_{max}(t)$ des Signals der integrierten Spannung und einer absoluten Referenzspannung $V_a$ erfolgt.

**Claims**

1. An angular measurement method of a rotating part by means of a variable reluctance magnetic sensor comprising a fixed portion (3) associated to a coil (2) and at least one moving element (4) attached to the rotating part consisting in integrating the output signal of the sensor, and characterized in this that it comprises the following steps :

— tracing the integrated signal curve for one turn at a constant speed whereby each instantaneous amplitude of the integrated signal corresponds to an instantaneous angular value, and

— measuring for any speed, possibly variable, the instantaneous value of the integrated signal and deducing therefrom the corresponding angular value.

2. An angular measurement device comprising a variable reluctance magnetic circuit comprising a fixed portion (3) associated with a coil (2) and at least a moving element (4) attached to a part (5) rotating in front of the fixed portion, the angular position of which is to be detected, comprising means (I) for integrating the voltage across the coil, characterized in this that it further comprises :

— means for measuring the instantaneous value of the integrated voltage (15),

— means for comparing this measure to a calibrating curve of the integrated voltage versus the angle.

3. A device for detecting the passing of a rotating part through an adjustable chosen angular position comprising a variable reluctance magnetic circuit comprised of a fixed portion (3) associated to a coil (2) and at least one moving element (4) attached to said part (5) rotating in front of the fixed portion, comprising an integrator integrating the sensor signal, a comparator comparing the integrated voltage to a reference value, characterized in this that the reference value is chosen for corresponding to a determined angular position.

4. An angular measurement device according to claim 2, characterized in this that the measurement means comprise comparison means (15, $V_0$) comparing the integrated voltage to a reference value corresponding to a predetermined angle.

5. An angular measurement device according to claim 2, characterized in this that it comprises means (20) for adding to the integrated voltage a signal proportional to the coil voltage.

6. An angular measurement device according to claim 4, characterized in this that it comprises means (22, 32) for calibrating the integrated voltage curve by servocontrolling the reference voltage resulting from a comparison between the maximum value $V_{max}(t)$ of the integrated voltage signal and an absolute reference voltage ($V_a$).

FIG_1-a

FIG_1-b

FIG_2

# FIG_3